# EUROPÄISCHE PATENTSCHRIFT

(11) **EP 0 548 611 B1**
(45) Veröffentlichungstag und Bekanntmachung des Hinweises auf die Patenterteilung: **13.03.1996**
(21) Anmeldenummer: 92120601.7
(22) Anmeldetag: 03.12.1992
(51) Int. Cl.: H02K 7/20, G01P 1/02

(54) **Elektromotor mit einem Tachogenerator**
Electric motor with tachogenerator
Moteur électrique avec génératrice tachymétrique

(30) Priorität: 20.12.1991 DE 4142181
(43) Veröffentlichungstag der Anmeldung: 30.06.1993
(73) Patentinhaber: Licentia Patent-Verwaltungs-GmbH, D-60596 Frankfurt (DE)
(72) Erfinder: Appeldorn, Alfred, Dipl.-Ing., W-2904 Hatten (DE)
(74) Vertreter: Vogl, Leo, Dipl.-Ing.

(56) Entgegenhaltungen:
- GB-A- 2 205 004
- US-A- 3 742 267
- US-A- 4 827 175

## Beschreibung

Die Erfindung betrifft einen Elektromotor mit einem Tachogenerator der im Oberbegriff des Patentanspruchs 1 angegebenen Art.

Elektromotore mit Tachogeneratoren sind allgemein bekannt, welche z. B. als Drehzahlwächter oder auch zur Steuerung und Regelung der Drehzahl dienen. Sie sind auch als Schutzeinrichtungen geeignet. So ist durch die DE 69 37 824 U1 eine Schutzeinrichtung für einen elektromotorisch angetriebenen Kleinlüfter bekannt, wobei zur Erzeugung einer tachogeneratorischen, von der Lüfterdrehzahl abhängigen Spannung ein polarisierter Magnetring am Rotor befestigt ist, welcher in einer statorseitigen Generatorwicklung eine Spannung induziert. Dieser Tachogenerator befindet sich in einem Gehäuse, welches mittels federnder Finger an einer Außenseite des Lüftergehäuses befestigbar ist. Um hierbei eine sichere Rastung zu erzielen, müssen das Tachogeneratorgehäuse und das die Wicklung umgebende Gehäuse sehr genau gefertigt werden. Außerdem ist die Montage zeitaufwendig.

Durch GB - A 25 08 004 ist ein Elektromotor mit einem Tachogenerator bekannt, welcher an der Außenseite des Elektromotors an einem Lagerschild als Anbaueinheit mittels eines kappenförmigen Gehäuses verrast angeordnet ist. Hierbei weist das kappenförmige Tachogeneratorgehäuse an der offenen Stirnseite radial federnde Rastarme mit Rastnasen auf, welche hinter Rastkanten von einer Ausnehmung in dem Lagerschild verrastbar sind.

Der Erfindung liegt die Aufgabe zugrunde, einen Elektromotor mit einem Tachogenerator auszurüsten, der einfach und spielfrei montier- und leicht austauschbar ist. Außerdem sollen jegliche Geräuscherhöhungen ausgeschlossen werden. Diese Aufgabe wird durch die im Patentanspruch 1 gekennzeichneten Merkmale gelöst.

Das Gehäuse mit dem Tachogenerator ist schnell und einfach montier- und auch austauschbar, wobei die in dem Tachogeneratorgehäuse befindlichen Bauteile alle spielfrei gelagert sind, so daß keine Klappergeräusche verursacht werden können. Da das Gehäuse nach der Verrastung noch etwas zurückfedert, wird eine fehlerhafte Montage ausgeschlossen.

Weitere vorteilhafte Ausgestaltungen des Erfindungsgegenstandes sind den weiteren Unteransprüchen zu entnehmen. Die Erfindung wird anhand von Ausführungsbeispielen im folgenden näher erläutert. Es zeigen:
- Figur 1: einen Längsschnitt durch einen Elektromotor mit einem Tachogenerator,

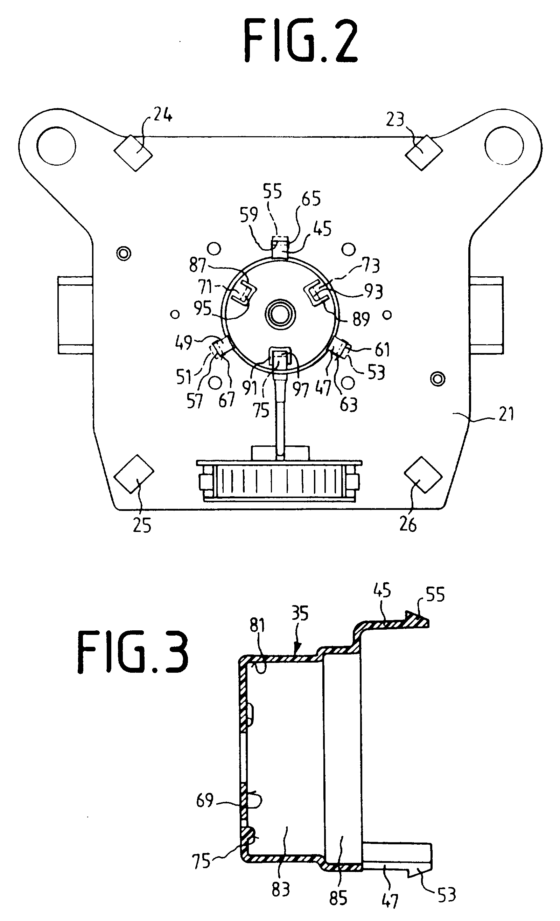

- Figur 2: eine Seitenansicht auf den Motor und
- Figur 3: einen Schnitt durch das Tachogeneratorgehäuse.

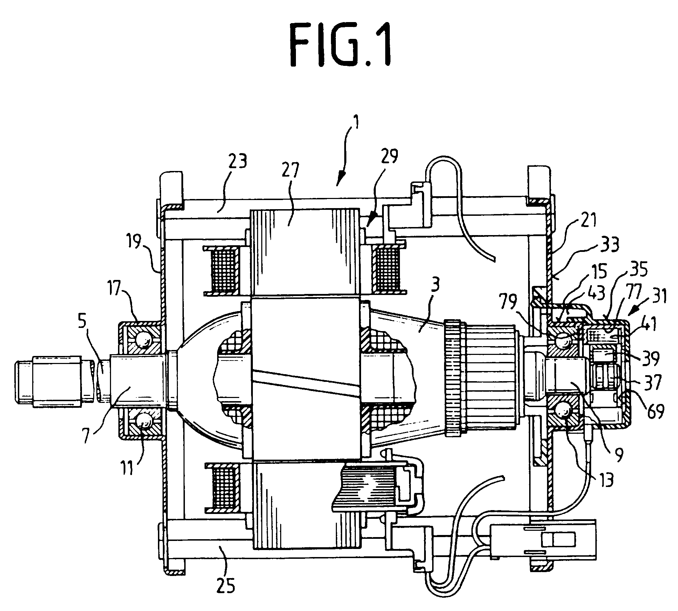

Die Figur 1 zeigt einen Längsschnitt durch einen Elektromotor 1 mit einem Rotor 3, dessen Antriebswelle 5 mit Lagerflächen 7, 9 in Kugellagern 11, 13 drehbar gelagert ist. Diese Kugellager 11, 13 befinden sich in als Ausprägungen ausgebildeten zylindrischen Lagerteilen 15, 17 an den Außenseiten von Lagerschilden 19, 21, welche durch vier U-förmige Profilelemente 23, 24, 25, 26 auf Abstand gehalten werden und mit diesen fest verbindbar sind. Das Blechpaket 27 des Stators 29 ist mit den vier Profilelementen 23, 24, 25, 26 fest verbunden. Der Elektromotor 1 ist mit einem Tachogenerator 31 versehen, welcher an der Außenseite 33 des Lagerschildes 21 als Anbaueinheit mittels eines kappenförmigen Gehäuses 35 verrastbar angeordnet ist. An dem freien Ende 37 der Antriebswelle 5 ist ein Magnetpolrad 39 befestigt, welches von einem in dem Tachogeneratorgehäuse 35 gelagerten Erregerwicklung 41 konzentrisch bzw. symmetrisch umgeben ist. Das Tachogeneratorgehäuse 35 weist im Bereich seiner offenen Stirnseite 43 radial federnde, in axialer Richtung einzeln voneinander angeordnete Rastarme 45, 47, 49 mit außenseitig an deren freien Enden angeordneten Rastnasen 51, 53, 55 auf, welche hinter inneren Rastkanten 57, 59, 61 von Rastausnehmungen 63, 65, 67 in dem Lagerschild 21 verrastbar sind. Die Bodenfläche 69 im Inneren des Tachogeneratorgehäuses 31 ist mit in axialer Richtung vorstehenden und federnden Andrucknasen 71, 73, 75 versehen, durch welche das die Wicklung 41 umgebende Gehäuse 77 gegen die Stirnfläche 79 des Lagerteiles 15 an dem Lagerschild 21 preßbar ist und durch welche die Rastnasen 51, 53, 55 an dem Tachogeneratorgehäuse 31 gegen die inneren Rastkanten 57, 59, 61 ziehbar sind. Hierdurch wird eine spielfreie Lagerung des Tachogenerators 31 erzeugt, ohne daß Klappergeräusche entstehen können.

Das kappenförmig ausgebildete Tachogeneratorgehäuse 35 ist zylindrisch ausgebildet und im Durchmesser abgesetzt. Hierbei dient der nicht abgesetzte untere Teil in dem Tachogeneratorgehäuse 35 zur Aufnahme des die Wicklung 41 umgebenden Gehäuses 77, während der abgesetzte Teil spielfrei über das topfförmige Lagerteil 15 gestülpt ist. Hierdurch wird eine exakte Positionierung des Tachogenerators 31 ermöglicht.

Um eine Vorspannung für die federnden Rastarme 45, 47, 49 zu erhalten, weisen diese eine schwache Neigung unter einem Neigungswinkel von etwa 3 Grad nach außen auf. Im Rahmen der Erfindung sind auch andere Neigungswinkel möglich. Übrigens sind die federnden Rastarme 45, 47, 49 an der offenen Stirnseite 43 des Tachogeneratorgehäuses 35 und die federnden Andrucknasen 71, 73, 75 auf der Bodenfläche 69 des Tachogeneratorgehäuses 35 zueinander versetzt angeordnet. So ist das Tachogeneratorgehäuse 35 mit drei um 120 Grad zueinander versetzt angeordneten Rastarmen 45, 47, 49 und mit drei entsprechend um 120 Grad versetzt angeordneten Andrucknasen 71, 73, 75 versehen. Hierdurch wird eine sichere Lagerung des Tachogeneratorgehäuses 35 erzielt. Das Tachogeneratorgehäuse 35 besteht aus einem Kunststoffspritzteil und ist daher leicht und billig herzustellen. Aus diesem Grunde werden die federnden Andrucknasen 71, 73, 75 durch in der Bodenfläche 69 des Tachogeneratorgehäuses 35 von der Umfangsfläche 81 ausgehende, U-förmige Aussparungen 87, 89, 91 gebildet, die auf ihren freien Enden gegenüber der Bodenfläche 69 axial vorstehende Rippen 93, 95, 97 aufweisen. Diese Rippen 93, 95, 97 weisen zweckmäßigerweise eine abgerundete Oberfläche auf.

Das erfindungsgemäße Tachogeneratorgehäuse 35 mit dem Tachogenerator 1 ist einfach und schnell zu montieren, wobei die spielfreie Lagerung der einzelnen Bauteile das Entstehen von Klappergeräuschen sicher verhindert.

## Patentansprüche

1. Elektromotor mit einem Tachogenerator, welcher an der Außenseite des Elektromotors an einem Lagerschild als Anbaueinheit mittels eines kappenförmigen Gehäuses verrastbar angeordnet ist, wobei das auf der Antriebswelle des Elektromotors befestigte Magnetpolrad von einer in dem Tachogeneratorgehäuse gelagerten Erregerwicklung konzentrisch umgebbar ist, wobei das kappenförmige Tachogeneratorgehäuse (35) an der offenen Stirnseite (43) radial federnde, in axialer Richtung einzeln vorstehende Rastarme (45, 47, 49) mit außenseitig an deren freien Enden angeordneten Rastnasen (51, 53, 55) aufweist, welche hinter inneren Rastkanten (57, 59, 61) von Ausnehmungen (63, 65, 67) in dem Lagerschild (21) verrastbar sind, **dadurch gekennzeichnet**, daß die Bodenfläche (69) im Inneren des Tachogeneratorgehäuses (35) in axialer Richtung vorstehende und federnde Andrucknasen (71, 73, 75) aufweist, durch welche das die Wicklung (41) umgebende Gehäuse (77) gegen das Lagerschild (21) preßbar ist und die Rastnasen (51, 53, 55) an dem Tachogeneratorgehäuse (35) gegen die inneren Rastkanten (57, 59, 61) ziehbar sind.

2. Elektromotor nach Anspruch 1, **dadurch gekennzeichnet**, daß das kappenförmige Tachogeneratorgehäuse (35) zylindrisch ausgebildet und ein im Durchmesser abgesetztes Teil (85) aufweist, wobei der nicht abgesetzte untere Teil (83) zur Aufnahme des die Wicklung (41) umgebenden Gehäuses (77) und der abgesetzte Teil (85) zur Aufnahme des in dem Lagerschild (21) als Ausprägung ausgebildeten, topfförmigen Lagerteiles (15) für das Kugellager (13) zur Lagerung der Antriebswelle (5) dienen.

3. Elektromotor nach Anspruch 2, **dadurch gekennzeichnet**, daß die federnden Rastarme (45, 47, 49) eine schwache Neigung unter einem Neigungswinkel von etwa 3 Grad nach außen aufweisen.

4. Elektromotor nach einem der vorhergehenden Ansprüche, **dadurch gekennzeichnet,** daß die federnden Rastarme (45, 47, 49) an der offenen Stirnseite (43) des Tachogeneratorgehäuses (35) und die federnden Andrucknasen (71, 73, 75) auf der Bodenfläche (69) des Tachogeneratorgehäuses (35) zueinander versetzt angeordnet sind.

5. Elektromotor nach Anspruch 4, **dadurch gekennzeichnet,** daß das Tachogeneratorgehäuse (35) mit drei um 120 Grad zueinander versetzt angeordneten Rastarmen (45, 47, 49) und mit drei entsprechend um 120 Grad versetzt und mittig zwischen den Rastarmen (45, 47, 49) angeordneten Andrucknasen (71, 73, 75) versehen ist.

6. Elektromotor nach einem der vorhergehenden Ansprüche, **dadurch gekennzeichnet,** daß die federnden Andrucknasen (71, 73, 75) durch in der Bodenfläche (69) des Tachogeneratorgehäuses (35), von der Umfangsfläche (81) ausgehende, U-förmige Aussparungen (87, 89, 91) gebildet werden und auf ihren freien Enden gegenüber der Bodenfläche (69) axial vorstehende Rippen (93, 95, 97) aufweisen.

7. Elektromotor nach Anspruch 6, **dadurch gekennzeichnet,** daß die Rippen (93, 95, 97) abgerundete Oberflächen aufweisen.

8. Elektromotor nach einem der vorhergehenden Ansprüche, **dadurch gekennzeichnet,** daß das Tachogeneratorgehäuse (35) aus einem Kunststoffspritzteil besteht.

## Claims

1. Electric motor with a tachogenerator, which is arranged at the outer side of the electric motor on a bearing plate as an attachment unit to be detentable by means of a cap-shaped housing, wherein the magnet pole wheel fastened to the drive shaft of the electric motor is concentrically surrounded by an excitation winding mounted in the tachogenerator housing, wherein the cap-shaped tachogenerator housing (35) has at the open end face (43) radially resilient detent arms (45, 47, 49), which project individually in axial direction, with detent lugs (51, 53, 55), which are arranged at the free ends of the arms at the outer side and which are detentable behind inner detent edges (57, 59, 61) of recesses in the bearing plate (21), characterised thereby that the base surface (69) has in the interior of the tachogenerator housing (35) presser lugs (71, 73, 75) which are resilient and project in axial direction, and by which the housing (77) surrounding the winding (41) is pressable against the bearing plate (21) and the detent lugs (51, 53, 55) at the tachogenerator housing (35) are drawable against the inner detent edges (57, 59, 61).

2. Electric motor according to claim 1, characterised thereby that the cap-shaped tachogenerator (35) is constructed to be cylindrical and has a part (85) offset in diameter, wherein the lower part (83) which is not offset serves for reception of the housing (77) surrounding the winding (41) and the offset part (85) serves for reception of the pot-shaped bearing part (15), which is constructed as a stamping out in the bearing plate (21), for the ball bearing (13) for the mounting of the drive shaft (5).

3. Electric motor according to claim 2, characterised thereby that the resilient detent arms (45, 47, 49) have a shallow outward inclination with an angle of inclination of about 3 degrees.

4. Electric motor according to one of the preceding claims, characterised thereby that the resilient detent arms (45, 47, 49) at the open end face (43) of the tachogenerator housing (35) and resilient presser lugs (71, 73, 75) on the base surface (69) of the tachogenerator housing (35) are arranged offset relative to one another.

5. Electric motor according to claim 4, characterised thereby that the tachogenerator housing (35) is provided with three detent arms (45, 47, 49) arranged offset relative to one another by 120 degrees and with three corresponding presser lugs (71, 73, 75) arranged offset by 120 degrees and centrally between the detent arms (45, 47, 49).

6. Electric motor according to one of the preceding claims, characterised thereby that the resilient presser lugs (71, 73, 75) are formed by U-shaped recesses (87, 89, 91) starting out from the circumferential surface (81) in the base surface (69) of the tachogenerator housing (35) and at their free ends have ribs (93, 95, 97) projecting axially relative to the base surface (69).

7. Electric motor according to claim 6, characterised thereby that the ribs (93, 95, 97) have radiussed surfaces.

8. Electric motor according to one of the preceding claims, characterised thereby that the tachogenerator housing (35) consists of an injection-moulded component of synthetic material.

## Revendications

1. Moteur électrique comprenant une génératrice tachymétrique qui, en tant que pièce rapportée sur la face externe du moteur, est montée, par encliquetage au moyen d'un carter en forme de capot, contre un flasque, la roue polaire magnétique fixée sur l'arbre menant du moteur électrique pouvant être entourée de manière concentrique par un enroulement inducteur logé dans le carter de la génératrice tachymétrique, le carter de la génératrice tachymétrique (35) en forme de capot présentant sur la face frontale ouverte (43) des bras d'encliquetage (45, 47, 49), élastiques radialement et faisant saillie axialement, qui sont munis, sur la face externe de leurs extrémités libres, de crans d'arrêt (51, 53, 55) qui s'encliquètent dans le flasque (21) derrière les bords d'arrêt (57, 59, 61) d'encoches (63, 65, 67), caractérisé en ce que la surface de fond (69) présente, dans l'enceinte du carter (35) de la génératrice tachymétrique, des tenons de pression (71, 73, 75) élastiques et saillants dans le sens axial qui pressent le carter (77) renfermant la bobine (41) contre le flasque (21) et les crans d'arrêt (51, 53, 55), sur le carter (35) de la génératrice tachymétrique, viennent s'appliquer contre les bords d'arrêt internes (57, 59, 61).

2. Moteur électrique selon la revendication 1, caractérisé en ce que le carter (35) de la génératrice tachymétrique présente la forme d'un capot cylindrique et une partie (85) de diamètre étagée, la partie inférieure non étagée (83) servant au logement du carter (77) entourant la bobine (41), et la partie étagée (85) servant au logement de la partie de palier (15) en forme de pot ménagée comme une empreinte dans le flasque (21) pour le roulement à bille (13) servant au logement de l'arbre menant (5).

3. Moteur électrique selon la revendication 2, caractérisé en ce que les bras d'encliquetage élastiques (45, 47, 49) présentent une légère inclinaison vers l'extérieur suivant un angle d'environ 3°.

4. Moteur électrique selon l'une des revendications précédentes, caractérisé en ce que les bras d'encliquetage élastiques (45, 47, 49) sont disposés de manière décalée les uns par rapport aux autres sur la face frontale avant (43) du carter (35) de la génératrice tachymétrique et les tenons de pression (71, 73, 75) élastiques sont disposés sur la surface de fond (69) du carter (35) de la génératrice tachymétrique de manière décalée les uns par rapport aux autres.

5. Moteur électrique selon la revendication 4, caractérisé en ce que le carter (35) de la génératrice tachymétrique est muni de trois bras d'encliquetage (45, 47, 49) disposés de manière décalée de 120° les uns par rapport aux autres et de trois tenons de pression (71, 73, 75) décalés en conséquence de 120° les uns par rapport aux autres et disposés au milieu entre les bras d'encliquetage (45, 47, 49).

6. Moteur électrique selon l'une des revendications précédentes, caractérisé en ce que les tenons de pression (71, 73, 75) élastiques présentent, sur leurs extrémités libres, des nervures (93, 95, 97) saillant axialement vis-à-vis de la surface de fond (69), qui sont formées par des encoches (87, 89, 91) en forme de U qui partent de la surface périphérique (81) et qui sont ménagées dans la surface de fond (69) du carter (35) de la génératrice tachymétrique.

7. Moteur électrique selon la revendication 6, caractérisé en ce que les nervures (93, 95, 97) présentent des surfaces arrondies.

8. Moteur électrique selon l'une des revendications précédentes, caractérisé en ce que le carter (35) de la génératrice tachymétrique se compose d'une pièce en matière plastique par injection.
